# EUROPEAN PATENT APPLICATION

(11) **EP 4 566 704 A1**
(43) Date of publication of application: **11.06.2025**
(21) Application number: 24217685.7
(22) Date of filing: 05.12.2024
(51) Int. Cl.: B01J 8/02, C01C 1/04

(54) **MIXED GAS DISTRIBUTION PLATE FOR AMMONIA SYNTHESIS REACTOR AND AMMONIA SYNTHESIS SYSTEM INCLUDING THE SAME**

(30) Priority: 06.12.2023 KR 20230175316; 06.12.2023 KR 20230175264
(71) Applicant: SK Innovation Co., Ltd., Seoul 03188 (KR)
(72) Inventor: LEE, Jun Young, Daejeon 34124 (KR); SONG, Da Eun, Daejeon 34124 (KR); IM, Ju Hwan, Daejeon 34124 (KR); JEONG, Jae Hun, Daejeon 34124 (KR); KIM, Sun Kug, Daejeon 34124 (KR); KIM, Ye Jin, Daejeon 34124 (KR)
(74) Representative: Prüfer & Partner mbB Patentanwälte · Rechtsanwälte

(57) **Abstract**

Provided is an ammonia synthesis system including an ammonia synthesis reactor; a single or two or more catalyst beds included in the ammonia synthesis reactor; a distribution device disposed upstream from each of the catalyst beds and distributing mixed gas to the catalyst bed; a mixed gas supply line disposed to supply the mixed gas to the distribution device; and each mixed gas distribution plate is disposed between the catalyst bed and the distribution device and includes a plurality of openings, wherein some openings among the plurality of openings are mounted with a cover at the bottom, and the opening mounted with the cover normally maintains the cover to be closed and to be opened under a fluid pressure.

## Description

### TECHNICAL FIELD

The present disclosure relate generally to an ammonia synthesis system, and to a method for synthesizing ammonia in the ammonia synthesis system.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find out means for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and at pressures of 8.5 atmospheres or higher, and thus be stored and transported more easily than hydrogen. Therefore, as an alternative to solve the problems occurring from the area ubiquity and temporal variability of renewable energy, it is necessary to focus on synthesizing ammonia by using hydrogen and nitrogen, which are produced using electricity produced from renewable energy, as its raw materials.

Hydrogen, one of the main raw materials for the ammonia synthesis, may be produced by a water electrolyzer powered by renewable energy such as solar or wind energy. Renewable energy, such as solar energy or wind energy, shows temporal variability. For example, solar energy is unable to be used at night. Therefore, an ammonia synthesis system is unable to be always operated at a constant flow rate, and it is thus necessary to anticipate and handle a change in the flow rate that occurs during a production cycle. In addition, a non-uniform flow rate distribution at the front end of a catalyst bed included in an ammonia synthesis reactor may get more and more less uniform when a flow rate of the raw material such as hydrogen fed into the ammonia synthesis system decreases or increases.

Therefore, there is a need for an ammonia synthesis system which may cope with the change in the flow rate that occurs during the production cycle, while solving the non-uniform flow rate distribution that occurs before the catalyst bed.

### SUMMARY

An embodiment of the present disclosure is directed to providing an ammonia synthesis system which may cope with a change in a flow rate that occurs during a production cycle.

Another embodiment of the present disclosure is directed to providing an ammonia synthesis system which may maintain a uniform flow rate distribution at the front end of a catalyst bed included in an ammonia synthesis reactor even when a flow rate of a raw material, such as hydrogen, fed into the ammonia synthesis system decreases, in particular if the decrease in flow rate is substantial.

Another embodiment of the present disclosure is directed to providing an ammonia synthesis system which may prevent a backflow of a raw material, such as hydrogen, fed into the front of a catalyst bed.

In one embodiment, provided is a mixed gas distribution plate for an ammonia synthesis reactor, the plate including a plurality of openings, wherein some openings among the plurality of openings are mounted with a cover at the bottom, and the cover is opened under a fluid pressure.

The opening mounted with the cover may have a cover fixing bracket disposed at the top, which is connected with the cover each other by a spring, or the openings mounted with the cover by being coupled to a hinge, preferably wherein the coupling part of the hinge includes a spring.

In the opening mounted with the cover, the cover mounted on the opening may be automatically opened and closed in a sliding manner by an electric motor and a gear.

The mixed gas distribution plate may have an opening ratio of 5 to less than 100% regardless of with the cover or not, where the opening ratio is a percentage of a total area of the openings on one plate to a total area of the plate.

An area ratio of the opening mounted with no cover to the opening mounted with the cover may be 1:0.5 to 1:1.5.

The plate may further include a plurality of mixed gas flow pipes fixed to a lower surface of the plate.

The mixed gas flow pipe may have a bottom surface and a side surface connecting the bottom surface with the distribution plate, a plurality of upper apertures may be formed in a side surface of an upper part of the mixed gas flow pipe spaced apart from each other along a circumference of the pipe, a plurality of middle apertures may be formed in a side surface of a middle part of the mixed gas flow pipe spaced apart from each other along the circumference, a plurality of lower apertures may be formed in a side surface of a lower part of the mixed gas flow pipe spaced apart from each other along the circumference, and optionally the mixed gas flow pipe may include a cover surrounding at least some regions of the side surface of the mixed gas flow pipe to provide a space for a fluid flowing out of the side surface of the mixed gas flow pipe after passing through the upper aperture to be guided toward the middle aperture.

The mixed gas flow pipe may further include a separator plate dividing the upper and middle parts of the mixed gas flow pipe from each other.

The mixed gas distribution plate may have a cap disposed on a lower surface of the opening.

In another embodiment, provided is an ammonia synthesis system including an ammonia synthesis reactor; a single or two or more catalyst beds included in the ammonia synthesis reactor; a distribution device disposed upstream from each of the catalyst beds and distributing mixed gas to the reactor; a supply line disposed to supply the mixed gas to the distribution device; and a mixed gas distribution plate disposed between the catalyst bed and the distribution device.

The system may further include a microwave heating device for emitting microwaves to each of the catalyst beds, preferably further comprising a microwave guide for guiding the microwave to reach the catalyst bed.

In another embodiment, provided is a method for synthesizing ammonia using the ammonia synthesis system.

Ammonia may be synthesized in the ammonia synthesis system at 10 to 300 bar, and/or at 100 to 800°C.

The distribution device may have a disk shape or a toroidal shape.

The system may further include a backflow prevention plate disposed downstream from each of the catalyst beds except for the catalyst bed disposed at the lowest of the two or more catalyst beds and preventing a backflow of the mixed gas.

In another embodiment, provided is a mixed gas distribution plate for an ammonia synthesis reactor, the mixed gas distribution plate comprising:
a plurality of first openings,
a plurality of mixed gas flow pipes, each mixed gas flow pipe having a first fluid chamber and a second fluid chamber each with a plurality of side surface openings, a separator plate separating the first and second fluid chambers and optionally a side cover forming a side fluid path between the mixed gas flow pipe and the side cover, wherein mixed gas flow entering the mixed gas flow pipe though a first opening exits the first part through the side openings of the first fluid chamber of the mixed gas flow pipe into the side fluid path and then enters into the second fluid chamber of the mixed gas flow pipe.

Other features and aspects will be apparent from the following detailed description, the drawings, and the claims.

### BRIEF DESCRIPTION OF THE DRAWINGS

FIG. 1 is a schematic view showing an ammonia synthesis system according to an embodiment of the present disclosure.
FIG. 2 is a schematic view showing a mixed gas distribution plate according to an embodiment of the present disclosure.
FIG. 3 is a schematic view showing an opening mounted with a cover by having a spring and a cover fixing bracket according to an embodiment of the present disclosure.
FIG. 4 is a schematic view showing the mixed gas distribution plate further including a mixed gas flow pipe disposed at the bottom of the opening according to an embodiment of the present disclosure.
FIG. 5 is a schematic view showing the mixed gas distribution plate according to an embodiment of the present disclosure.
FIG. 6 is a schematic view showing a case where the opening of the mixed gas distribution plate mounted with a cover openable by being coupled to the plate by a hinge according to an embodiment of the present disclosure.
FIG. 7 is a schematic view showing an ammonia synthesis system according to another embodiment of the present disclosure.

### DETAILED DESCRIPTION

Various advantages and features of the present disclosure and methods for accomplishing the same are apparent from the embodiments described in detail below. However, the embodiments of the present disclosure are not limited to the embodiments disclosed below, and may be implemented in various different forms. These embodiments are provided only to make the present disclosure complete and allow those skilled in the art to completely appreciate the scope of the present disclosure. The embodiments of the present disclosure are defined by the scope of the claims.

Unless defined otherwise, all terms (including technical and scientific terms) used in the specification have the same meanings as meanings commonly understood by those skilled in the art to which the present disclosure pertains.

A term of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

The term "to include" or "to comprise" in the specification is a comprehensive description that has the meaning equivalent to an expression such as "to include", to comprise", "to contain", "to have", or "to be featured", and does not exclude an element, a material, or a process that is not additionally enumerated.

The terms "top", "middle" and bottom", or "upper", "middle" and "lower"/"lowest" etc. generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

The term "opening" means a hole or space through which something can pass on the plate itself.

Unless otherwise indicated, a unit of % used in the specification may indicate % by weight.

In the specification, "A to B" indicates "A or more and B or less" unless otherwise specifically defined.

Hereinafter, an ammonia synthesis system of the present disclosure is described in detail. However, the embodiments are only exemplary, and the present disclosure is not limited to the specific embodiments described.

Embodiments of the present disclosure may provide an ammonia synthesis system including an ammonia synthesis reactor; a single or two or more catalyst beds included in the ammonia synthesis reactor; a distribution device disposed upstream of each of the catalyst beds and distributing mixed gas to the reactor; a supply line disposed to supply the mixed gas to the distribution device; and each mixed gas distribution plate disposed between the catalyst bed and the distribution device.

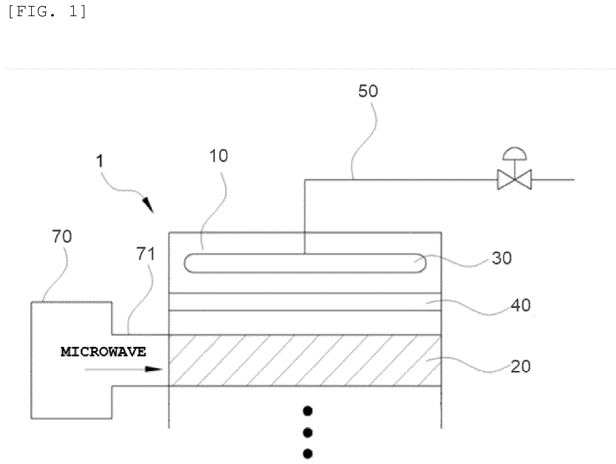

Referring to FIG. 1, an ammonia synthesis system 1 according to an embodiment of the present disclosure may include: an ammonia reactor 10; a catalyst bed 20 included in the ammonia reactor 10; a distribution device 30 disposed above the catalyst bed for distributing the mixed gas to the reactor; a mixed gas supply line 50 in fluid communication with the distribution device 30 and configured to supply the mixed gas to the distribution device 30; and a mixed gas distribution plate 40 disposed between the catalyst bed 20 and the distribution device 30.

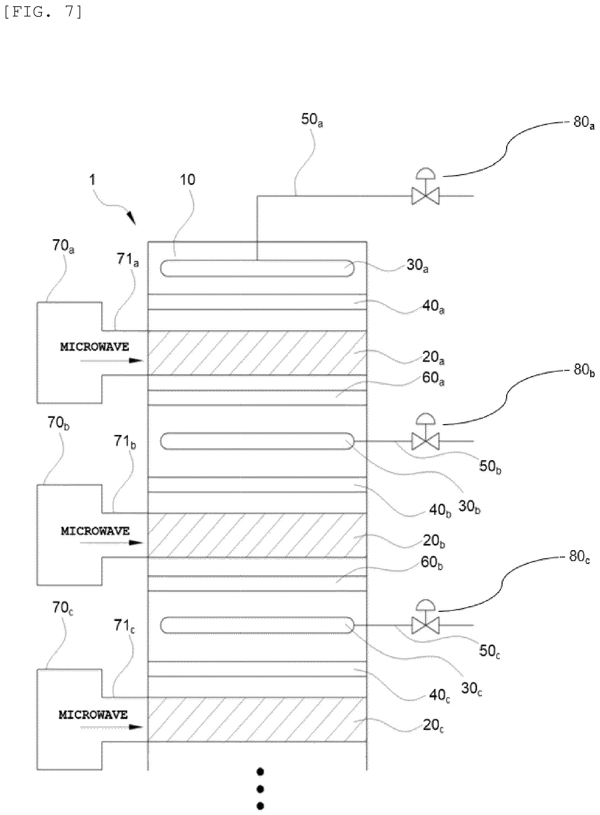

Referring to FIG. 7, the ammonia synthesis system 1 according to an embodiment of the present disclosure may include the ammonia synthesis reactor 10; three or more catalyst beds 20ₐ, 20_{b}, and 20_{c} included in the ammonia synthesis reactor 10; three or more distribution devices 30ₐ, 30_{b}, and 30_{c} disposed upstream of each catalyst beds 20ₐ, 20_{b}, and 20_{c} for distributing the mixed gas to the catalyst beds 20ₐ, 20_{b}, and 20_{c}; three or more mixed gas supply lines 50ₐ, 50_{b}, and 50_{c} arranged to supply the mixed gas to the distribution devices 30ₐ, 30_{b}, and 30_{c}; and three or more mixed gas distribution plates 40ₐ, 40_{b}, or 40_{c}, wherein each of the mixed gas distribution plates 40ₐ, 40_{b}, or 40_{c} is disposed between a corresponding pair of one of the catalyst beds 20ₐ, 20_{b}, or 20_{c} and one of the distribution devices 30ₐ, 30_{b}, or 30_{c}. Specifically, the mixed gas distribution plate 40ₐ is disposed between the catalyst bed 20ₐ and the distribution device 30ₐ. Likewise, the mixed gas distribution plate 40_{b} is disposed between the catalyst bed 20_{b} and the distribution device 30_{b}, and the mixed gas distribution plate 40_{c} is disposed between the catalyst bed 20_{c} and the distribution device 30_{c}.

As described above with reference to FIG. 7, the ammonia synthesis system 1 may uniformly use each of the catalyst beds 20ₐ, 20_{b}, and 20_{c}, and optimize energy use in an ammonia synthesis process because the mixed gas is selectively fed into each distribution device 30ₐ, 30_{b}, or 30_{c} disposed upstream of each catalyst bed 20ₐ, 20_{b}, or 20_{c} based on a flow rate of the mixed gas supplied.

This is indicated by the dotted lines in Figs. 1 and 7, noting that corresponding components like microwave heating device, mixed gas supply lines, flow regulating devices, distribution devices, backflow prevention plates may independently be provided for each or some of the multiple catalyst beds.

In addition, the ammonia synthesis system may maintain the uniformity of the mixed gas fed into the system by including each mixed gas distribution plate 40ₐ, 40_{b}, or 40_{c} disposed between each catalyst bed 20ₐ, 20_{b}, or 20_{c} and each distribution device 30ₐ, 30_{b}, or 30_{c}.

The ammonia synthesis system 1 may much more effectively operate against a change in the flow rate that occurs during a production cycle by including the mixed gas supply lines 50ₐ, 50_{b}, and 50_{c} to supply the mixed gas to each of two or more catalyst beds 20ₐ, 20_{b}, and 20_{c}. For example, the ammonia synthesis system 1 may be operated by feeding the gas through the mixed gas supply line 50ₐ disposed at the top by making the gas firstly pass through the catalyst bed 20ₐ disposed at the top when the flow rate of the fed raw material is high. On the contrary, and the system may be operated by feeding the gas through the mixed gas supply line 50_{c} disposed at the bottom by making the gas pass through the catalyst bed 20_{c} disposed at the bottom rather than the catalyst bed 20ₐ disposed at the top when the flow rate of the fed raw material is low.

In addition, in a low flow rate operational mode as described above, there is no need to maintain a temperature of the entire reactor because the ammonia synthesis system may be operated by feeding the mixed gas through the mixed gas supply line 50_{c} which is disposed at the bottom of the ammonia reactor 10 by making the gas pass through the catalyst bed 20_{c} disposed at the bottom of the ammonia reactor 10. This way, energy consumption may be drastically reduced. That is, energy is saved by optimizing the amount of energy required by the system as needed during its operation.

According to an embodiment of the present disclosure, the ammonia synthesis system is not particularly limited as long as the system includes two or more catalyst beds. However, it may be preferred that the catalyst beds have two to five layers, two to four layers, or two to three layers because this configuration may minimize the volume of the reactor while providing excellent ammonia synthesis processability.

As it should be understood by the skilled person in this art from the above description, the number of the distribution devices, the supply lines, the mixed gas distribution plates, and the backflow prevention plates, may also be increased as the ammonia synthesis system includes more catalyst beds.

In general, when the mixed gas has the low flow rate, distribution performance at the top of the catalyst bed may be reduced, which may cause the catalyst disposed even at the same height in one catalyst bed to have a different reaction performance. The catalyst replacement cycle may be determined by the reaction performance at the bottom of the catalyst bed, and the replacement cycle of the bed may become shorter if the supplied mixed gas at some region at the bottom of the catalyst bed is over- or less-reacted due to non-uniform gas distribution caused by a reduced flow rate.

However, the ammonia synthesis system according to the present disclosure may include each mixed gas distribution plate 40 disposed between a corresponding one of the catalyst beds 20 and one of the distribution devices 30 to thus maintain the flow rate of the mixed gas brought into contact with the catalyst bed 20, and uniformly mix the mixed gas even when the flow rate of the mixed gas fed into the ammonia reactor 10 from the mixed gas supply line 50 is changed, thereby maintaining excellent ammonia synthesis performance.

In an embodiment according to the present disclosure, the mixed gas may include at least one selected from the group consisting of hydrogen and nitrogen.

Hydrogen may be produced by a device powered by renewable energy. For example, hydrogen may be produced by a water electrolyzer powered using renewable energy.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, the solar energy is unable to be used at night. Therefore, when hydrogen is produced using the device powered by renewable energy, the ammonia synthesis system is unable to be always operated at a constant flow rate. Hence, there is a need for the ammonia synthesis system of the present disclosure which can operate effectively against changes in the flow rate that may occur during the production cycle due to the temporal variability of renewable energy sources.

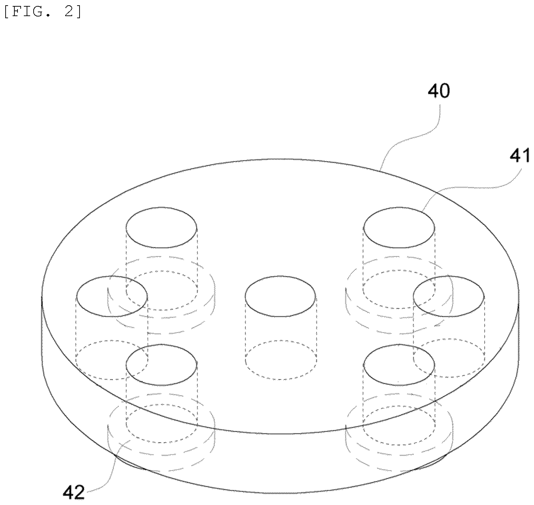

Referring to FIG. 2, the mixed gas distribution plate 40 according to an embodiment of the present disclosure may include a plurality of openings 41. Some if not all of the plurality of openings 41 may be openings mounted with a cover 42 at the bottom. The openings 41 mounted with the cover 42 may normally maintain the cover in a closed position at a certain fluid pressure (base fluid pressure, or normal fluid pressure), may be opened under an increased fluid pressure, and may be returned to the closed position again when fluid pressure is reduced to the normal fluid pressure.

In a conventional ammonia synthesis system, the mixed gas brought into contact with the front end of the catalyst bed may be unevenly distributed, which may reduce ammonia synthesis reactivity or shorten a lifespan of the catalyst, especially when the mixed gas is fed at an excessively low flow rate, not sufficient to satisfy the flow rate of the mixed gas required for the ammonia synthesis.

According to an embodiment of the present disclosure, the mixed gas distribution plate 40 may close the covers 42 mounted on some of the openings 41 when the fed mixed gas has a low flow (e.g., below a certain flow threshold), to regulae a flow rate of the mixed gas passing through the mixed gas distribution plate 40. In addition, the mixed gas distribution plate 40 may achieve a high ammonia yield under a condition where the flow rate of the mixed gas is high by opening the covers 42 mounted on some of the openings 41 when the fed mixed gas has a high flow rate.

Therefore, as described above, since the ammonia synthesis system according to an embodiment of the present disclosure may include the mixed gas distribution plate 40 having some openings 41 mounted with the cover 42 at the bottom, the flow rate of the mixed gas brought into contact with the catalyst bed may be uniformly maintained even when the fed mixed gas has the low flow rate. Moreover, the productivity of the ammonia synthesis may be enhanced when the fed mixed gas has the high flow rate. That is, the ammonia synthesis system including the mixed gas distribution plate may efficiently cope with the change in the flow rate of the mixed gas.

The mixed gas distribution plate 40 mounted with the openable cover 42 may maintain the cover 42 to be closed because the fluid pressure is lowered when the flow rate of the mixed gas fed into the upstream of each catalyst bed 20 by each distribution device 30 decreases. On the other hand, the cover 42 may be opened when the flow rate of the mixed gas increases. That is, even when the flow rate of the mixed gas decreases or increases causing the change in the flow rate, the system 1 may uniformly mix the mixed gas and feed the same to the catalyst bed, and operate the process stably by coping with the change in the flow rate.

In addition, the mixed gas distribution plate 40 mounted with the openable cover 42 may prevent the mixed gas passed through the mixed gas distribution plate 40 from flowing back again by the cover 42 mounted on lower surfaces of some of the openings 41. Therefore, the ammonia synthesis system 1 including the mixed gas distribution plate 40 may exhibit significantly improved ammonia synthesis performance and more stable operation.

In an embodiment, the flow rate during the production cycle may be classified into three categories for convenience, namely, a low flow rate, a medium flow rate, and a high flow rate. However, the change in the flow rate may be easily regulated by the common sense or judgment of those skilled in the art. For example, the low flow rate case indicates a case where the flow rate is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), however, the flow rate is not limited thereto.

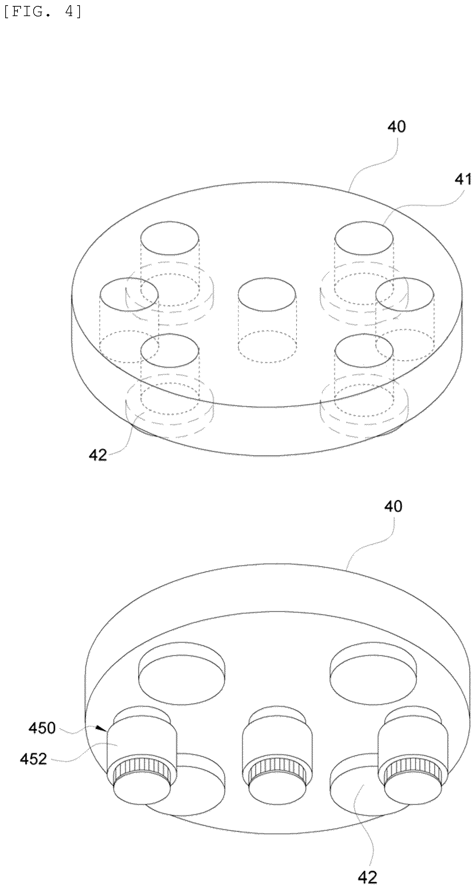

According to an embodiment of the present disclosure, the mixed gas distribution plate 40 may have the plurality of openings 41 and the covers 42 mounted on at least some of the openings 41. The openings 41 with the cover 42 and those openings without the cover 42 may be disposed as exemplified in Fig. 4.

According to an embodiment of the present disclosure, the mixed gas distribution plate may have an opening ratio of 5 to less than 100%, where the opening ratio is a percentage of a total area of the openings to a total area of the plate.

The mixed gas distribution plate having the opening ratio in this range may uniformly feed the mixed gas through the mixed gas supply line of the ammonia synthesis system into the upstream of each catalyst bed under an optimal condition for synthesizing ammonia.

According to another embodiment of the present disclosure, the opening ratio of the mixed gas distribution plate may be 5 to 60%, 10 to 50%, 10 to 40%, 10 to 30%, or 5 to 20%.

According to an embodiment of the present disclosure, in the mixed gas distribution plate, an area ratio of the openings mounted with no cover to the openings mounted with the cover may be 1:0.5 to 1:1.5. According to still another embodiment, the area ratio may be 1:0.7 to 1:1.3 or 1:0.9 to 1:1.1.

The mixed gas distribution plate including the opening of the area in the range described above may regulate the flow rate of the mixed gas that is fed at the low flow rate and passes through the catalyst bed, and thus may more efficiently distribute the mixed gas described above to the catalyst bed.

According to an embodiment of the present disclosure, the openings mounted with the cover may be opened when the fluid pressure is 1 bar or more in an opening direction of the cover. According to still another embodiment, the fluid pressure may be 10 bar or more or 50 bar or more, its upper limit is not limited, and the fluid pressure may be less than 300 bar, 250 bar or less, or 200 bar or less.

In the ammonia synthesis system, when the mixed gas is fed into the reactor and the cover mounted on the mixed gas distribution plate may have the fluid pressure of 1 bar or more, the cover mounted on the opening of the mixed gas distribution plate may be opened, and then a large amount of the mixed gas passed through the mixed gas distribution plate may thus be brought into contact with the catalyst bed to synthesize a large amount of ammonia. However, the fluid pressure at which the cover is opened may be changed based on an operating condition of the system 1.

The ammonia synthesis system according to the present disclosure ensures that the fed mixed gas is evenly mixed as the gas passes through the mixed gas distribution plate, and prevents the mixed gas from being brought into uneven contact with the catalyst bed.

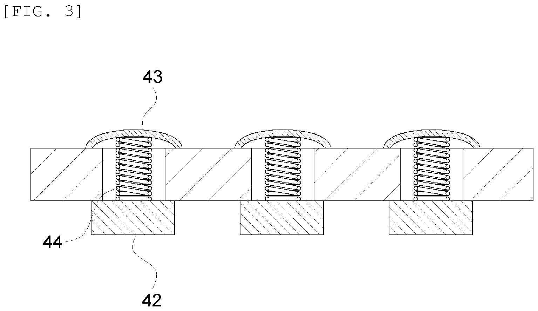

Referring to FIG. 3, in the mixed gas distribution plate 40 according to an embodiment of the present disclosure, the opening 41 mounted with the cover 42 may have a cover fixing bracket 43 disposed at the top, and a spring 44 connecting the cover fixing bracket 43 with the cover 42.

In the mixed gas distribution plate 40 shown in FIG. 3, the spring 44 may extend to open the cover mounted at the bottom of the opening 41 when the fluid pressure at the top of the opening is increased, and the spring 44 may be restored to close the opening mounted with the cover when the fluid pressure at the top of the opening is decreased back.

For example, the mixed gas distribution plate 40 according to an embodiment of the present disclosure with reference to FIG. 3 may include the plurality of brackets 43 disposed in the openings 41 and the springs 44 to which the covers 42 are connected. The cover 42 mounted on the opening 41 is opened extending the spring 44, when the mixed gas fed into the distribution device 30 has the increased flow rate. In addition, the spring 44 may be restored to its original state to close the mounted cover 42 when the flow rate of the fluid fed into the distribution device 30 has the fluid pressure in the range described above or less. That is, the mixed gas distribution plate 40 may thus regulate the flow rate of the mixed gas distributed to the opening 41.

In addition, the mixed gas distribution plate 40 mounted with the cover openable by the spring 44 and the cover fixing bracket 43 may be preferred because the mixed gas distribution plate 40 easily controls the mixed gas fed into the catalyst bed 20 just with a simple assembly.

In an embodiment according to the present disclosure, the bracket 43 to fix the cover may have a straight or cross shape at the top of the opening, but is not limited thereto. It is sufficient as long as the bracket 43 has a shape through which the fluid may pass.

The spring 44 according to an embodiment of the present disclosure may be a compression spring. The spring 44 may have a spring constant K of 0.0001 to 1,000 N/m, the spring constant K according to still another embodiment may be 0.001 to 1,000 N/m, 0.005 to 1,000 N/m, or 0.01 to 1,000 N/m. It is noted, however, that these are simply examples, and that the spring constant K may not be limited to these values only as long as the cover is opened under the fluid pressure of 1 bar or more.

The opening mounted with the cover according to still another embodiment of the present disclosure may be preferred because the opening uses a simple method of regulating a degree of opening and closing by using the spring described above. For example, in another embodiment, the cover mounted on the opening may be automatically opened and closed in a sliding manner by an electric motor and a gear. In yet another embodiment the cover may be opened and closed in a hinged manner.

That is, the ammonia synthesis system 1 may detect the flow rate of the mixed gas fed into the ammonia synthesis reactor 10 to automatically open or close the cover 42 of one or more of the openings 41.

In addition, the mixed gas distribution plate 40 may be mounted with a cover openable 63 by being coupled to a hinge 64 instead of the cover 42 disposed on the lower surface of some openings among the plurality of openings.

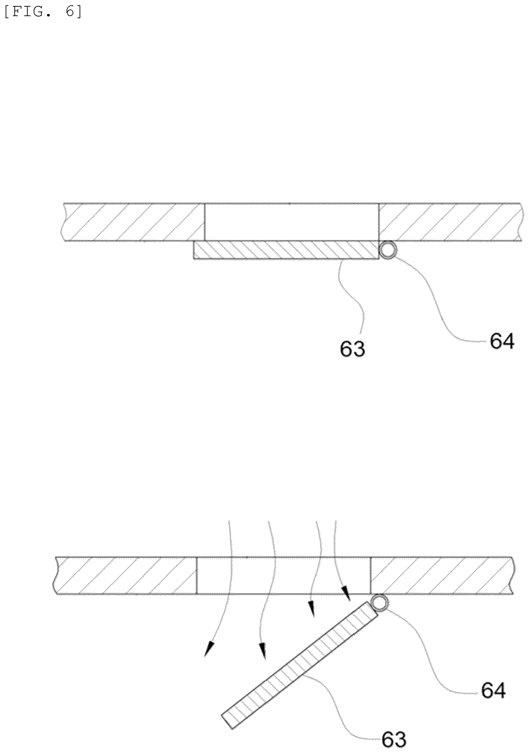

For example, referring to FIG. 6, the cover 63 is openable by being coupled to the hinge 64 and may be opened and closed under the fluid pressure.

A coupling part of the hinge 64 that is coupled to the hinge 64 may include a spring configured to apply an elastic force in a direction in which the cover 63 approaches the distribution plate. If the cover 63 has the spring as described above, the cover 64 may be closed when the mixed gas has the decreased flow rate and opened when the mixed gas has the increased flow rate. That is, even when the mixed gas has the decreased or increased flow rate to cause the change in the flow rate, the system 1 may uniformly mix the mixed gas and feed the mixed gas of the same flow rate into the catalyst bed, and operate the process stably by coping with the change in the flow rate.

Referring to FIG. 4, the mixed gas distribution plate 40 according to an embodiment of the present disclosure may further include a mixed gas flow pipe 450 fixed to the lower surface of the openings 41 that have no cover.

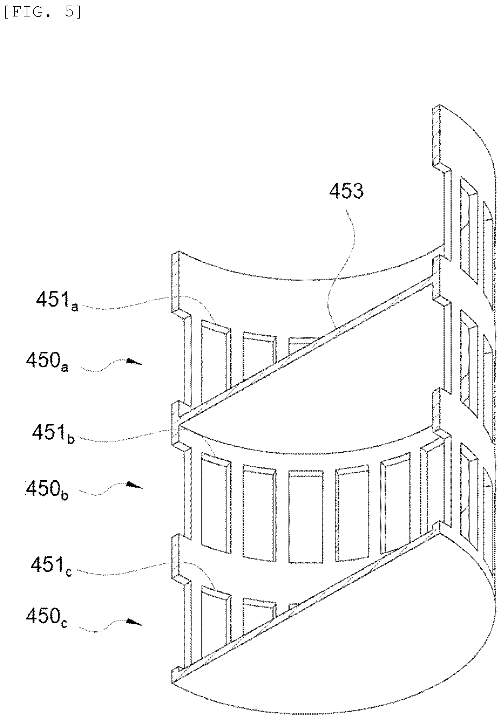

Referring to FIGS. 4 and 5, the mixed gas flow pipe may have a bottom surface and a side surface connecting the bottom surface with the distribution plate, a plurality of upper apertures 451ₐ may be formed in a side surface of an upper part 450ₐ of the mixed gas flow pipe 450 spaced apart from each other along a circumference of the pipe, a plurality of middle apertures 451_{b} may be formed in a side surface of a middle part 450_{b} of the mixed gas flow pipe 450 spaced apart from each other along the circumference, and a plurality of lower apertures 451_{c} may be formed in a side surface of a lower part 450_{c} of the mixed gas flow pipe spaced apart from each other along the circumference of the pipe.

A flow of the mixed gas may be formed through the upper aperture 451ₐ, the middle aperture 451_{b}, and the lower aperture 451_{c}. The mixed gas flow pipe 450 may include a side cover 452 surrounding at least some regions of the side surface of the mixed gas flow pipe 450 to provide a space for the fluid flowing out of the side surface of the mixed gas flow pipe 450 after passing through the upper aperture 451ₐ to be guided toward the middle aperture 451_{b}. The side cover 452 may surround at least one selected from the group consisting of the upper and middle parts of the side surface of the mixed gas flow pipe 450.

Referring to FIG. 5, the mixed gas flow pipe 450 may further include a separator plate 453 dividing the upper and middle parts of the mixed gas flow pipe 450 from each other. The separator plate 453 may completely separate the upper and middle parts of the mixed gas flow pipe 450 from each other to prevent the movement of the fluid. Therefore, the fluid flowing into the upper part of the mixed gas flow pipe 450 may flow out through the upper aperture 451ₐ into the space between the mixed gas flow pipe 450 and the side cover 452 rather than descending directly to the middle part, by the separator plate 453. The fluid in the space between the mixed gas flow pipe 450 and the side cover 452 may then flow into the mixed gas flow pipe through the middle aperture 451_{b}, descend downwards, and flow out of the mixed gas flow pipe 450 through the lower aperture 451_{c}. As described above, the fluid may follow a flow path in which the fluid flows out of the mixed gas flow pipe 450, flows back into the inside of the pipe, and flows out of the pipe again, thereby mixing the fluids more smoothly, and maintaining the uniform flow rate distribution before the catalyst bed.

The mixed gas distribution plate 40 described above may be at least one selected from two or more of the mixed gas distribution plates 40ₐ, 40_{b}, and 40_{c} included in the ammonia synthesis system 1 of FIG. 7, or may be applied to all of the mixed gas distribution plates 40ₐ, 40_{b}, and 40_{c} included in the ammonia synthesis system 1.

Referring to FIG. 7, according to one embodiment of the present disclosure, when the ammonia synthesis system 1 includes three mixed gas distribution plates 40ₐ, 40_{b}, and 40_{c}, different or the same pressures may be applied for opening the covers mounted on the upper mixed gas distribution plate 40ₐ, the middle mixed gas distribution plate 40_{b}, and the lower mixed gas distribution plate 40_{c}, included in the ammonia reactor 10.

For example, the cover mounted on the plurality of openings in the upper mixed gas distribution plate 40ₐ may be opened under the fluid pressure of 1 bar or more, 10 bar or more, or 50 bar or more. In addition, the cover mounted on the plurality of openings in the lower mixed gas distribution plate 40_{c} may be opened under the fluid pressure of 1 bar or more or 5 bar or more.

As described above, the ammonia synthesis system 1 including the plurality of catalyst beds 20ₐ, 20_{b}, and 20_{c} according to an embodiment shown in FIG. 7 may feed the mixed gas into the upper catalyst bed 20ₐ at the high flow rate and feed the mixed gas into the lower catalyst bed 20_{c} at the low flow rate, thereby coping with the change in the flow rate of the mixed gas and have an excellent catalyst lifespan.

In addition, for the mixed gas separately fed into each catalyst bed 20ₐ, 20_{b}, or 20_{c} at a different flow rate, each mixed gas distribution plate 40ₐ, 40_{b}, or 40_{c} mounted with the cover 42 described above may open and close the cover 42 mounted on the opening 41 to thus regulate the flow rate of the mixed gas brought into contact with the catalyst bed 20. Thus, ammonia is excellentlyand efficiently synthesized and the process is stably operated even when the flow rate of the supplied mixed gas is different from the mixed gas supply lines 50 or changed.

According to an embodiment of the present disclosure, an opening ratio Aₐ of the upper mixed gas distribution plate may be greater than 40%, 45 to 60%, or 50 to 60%.

According to an embodiment of the present disclosure, an opening ratio A_{b} of the middle mixed gas distribution plate may be 20 to 40%, 25 to 35%, or 30 to 35%.

According to an embodiment of the present disclosure, an opening ratio A_{c} of the lower mixed gas distribution plate may be less than 20%, 5 to 20%, or 10 to 20%.

According to still another embodiment of the present disclosure, a ratio of the opening ratio A_{b} of the middle mixed gas distribution plate to the opening ratio Aₐ of the upper mixed gas distribution plate may be less than 1, 0.3 to 0.8, or 0.4 to 0.7.

According to still another embodiment, a ratio of the opening ratio A_{c} of the lower mixed gas distribution plate to the opening ratio Aₐ of the upper mixed gas distribution plate may be less than 1, 0.1 to 0.5, or 0.2 to 0.4.

According to still another embodiment, a ratio of the opening ratio A_{c} of the lower mixed gas distribution plate to the opening ratio A_{b} of the middle mixed gas distribution plate may be less than 1, 0.3 to 0.8, or 0.4 to 0.7.

According to still another embodiment, a ratio of the opening ratio A_{c} of the lower mixed gas distribution plate to the opening ratio A_{b} of the middle mixed gas distribution plate may be less than 1, 0.1 to 0.9, or 0.3 to 0.6.

The upper mixed gas distribution plate 40ₐ, the middle mixed gas distribution plate 40_{b}, or the lower mixed gas distribution plate 40_{c} may regulate the number of the openings included therein to satisfy the opening ratio described above, and/or regulate a diameter of the opening to satisfy the opening ratio described above.

A diameter lₐ of the opening 41a in the upper mixed gas distribution plate 40ₐ, a diameter l_{b} of the opening 41b in the middle mixed gas distribution plate 40_{b}, and a diameter l_{c} of the opening 41c in the lower mixed gas distribution plate 40_{c} can satisfy lₐ ≥ l_{b} ≥ l_{c} or lₐ > l_{b} > l_{c}.

The opening ratios or diameters of the upper mixed gas distribution plate 40ₐ, the middle mixed gas distribution plate 40_{b}, and the lower mixed gas distribution plate 40_{c} may be sequentially reduced toward the bottom, thereby preventing a backflow of the mixed gas distributed to each catalyst bed, and assisting the mixed gas to easily flow from the top to the bottom. In addition, embodiments of the present disclosure may provide a gas distribution system that enables uniform and efficient reaction by improving the uniform flow rate distribution before the catalyst bed when the mixed gas has the low flow rate, and minimizing a load on gas supply to the catalyst bed when the mixed gas has the high flow rate, and the ammonia synthesis system using the same.

In an embodiment according to the present disclosure, the ammonia synthesis system may further include a backflow prevention plate 60 disposed downstream from each of the catalyst beds except for the catalyst bed disposed at the lowest of the two or more catalyst beds to prevent the backflow of the mixed gas.

In particular, the ammonia synthesis system according to an embodiment of the present disclosure may cope with the change in the flow rate that occurs during the production cycle by including the mixed gas supply line to supply the mixed gas to each of two or more catalyst beds. For example, the ammonia synthesis system may be operated by feeding the gas through the mixed gas supply line 50ₐ disposed at the top for the gas to firstly pass through the catalyst bed 20ₐ disposed at the top when the flow rate of the fed raw material is high. On the other hand, the system may be operated by feeding the gas through the mixed gas supply line 50_{c} disposed at the bottom for the gas to pass through the catalyst bed 20_{c} disposed at the bottom rather than the catalyst bed 20ₐ disposed at the top when the flow rate of the fed raw material is low. Here, the backflow of the mixed gas may be prevented by the backflow prevention plate 60_{b} when the mixed gas is fed through the mixed gas supply line 50_{c} disposed at the bottom to pass through the catalyst bed 20_{c} disposed at the bottom. Referring to FIG. 7, according to an embodiment of the present disclosure, the ammonia synthesis system may include an upper backflow prevention plate 60ₐ and a middle backflow prevention plate 60_{b}, respectively disposed downstream from the upper catalyst bed 20ₐ and the middle catalyst bed 20_{b}, excluding the lower catalyst bed 20_{c}.

The ammonia synthesis system 1 including the upper backflow prevention plate 60ₐ and the middle backflow prevention plate 60_{b} may be preferred because the system 1 prevents the mixed gas fed into the upper distribution device 30a and the middle distribution device 30b from being brought into contact with the upper catalyst bed 20ₐ again after passing through each of the upper catalyst bed 20ₐ and the middle catalyst bed 20_{b}. Thus, the ammonia synthesis system 1 may allow each of the upper catalyst bed 20ₐ and the middle catalyst bed 20_{b} to have a longer catalyst lifespan.

The backflow prevention plate according to an embodiment of the present disclosure is not particularly limited as long as the backflow prevention plate prevents the mixed gas passed through the catalyst bed from flowing back to the catalyst bed.

In an embodiment according to the present disclosure, the mixed gas supply line 50 may branch from one main supply line. In addition, the mixed gas supply line may be supplied with at least one gas selected from the group consisting of nitrogen and hydrogen through an individual supply line.

In an embodiment according to the present disclosure, the mixed gas supply line 50 may include a flow regulating device 80. The flow regulating device may enable the flow rate of the mixed gas to be controlled independently in each of the mixed gas supply lines.

For example, the flow regulating device 80a, 80b, and 80c may independently regulate the flow rate of the mixed gas flowing through each of the mixed gas supply lines for the flow rate of the mixed gas entering the distribution device to be maintained within a desired flow rate range. The flow regulating device may be a flow regulating valve. Therefore, the flow regulating device may save the energy by optimizing the amount of energy required by the system as needed during its operation.

In an embodiment according to the present disclosure, the distribution device 30 may have a disk shape or a toroidal shape, however the embodiment is not limited thereto. For example, any conventional gas distribution device may be used.

The ammonia synthesis system according to an embodiment of the present disclosure may include a microwave heating device 70 to enable a temperature in the central and in outer parts of the catalyst bed to be uniform at the beginning of its operation, thereby improving an ammonia synthesis yield.

For example, the microwave heating device may enable the temperature in the central and in outer parts of the catalyst bed to be uniform by emitting the microwaves to the catalyst bed before the beginning of the operation. In addition, the microwave heating device may improve the ammonia synthesis yield at the beginning of the operation by preheating the catalyst bed that is not sufficiently preheated at the beginning of the operation.

Referring to FIG. 7, the ammonia synthesis system 1 according to an embodiment of the present disclosure may include the microwave heating devices 70ₐ, 70_{b}, or 70_{c} to enable the temperature in the central and in outer parts of the catalyst bed 20ₐ, 20_{b}, or 20_{c} respectively, at the beginning of the operation, thereby improving the ammonia synthesis yield. For example, the microwave heating device may enable the temperature in the central and in outer parts of the catalyst bed to be uniform by emitting the microwaves to the catalyst bed at the beginning of the operation. In addition, the microwave heating device may improve the ammonia synthesis yield before the beginning of the operation by preheating the catalyst bed that is not sufficiently preheated before the beginning of the operation.

For example, when the fed raw material has the low flow rate, the ammonia synthesis system may be operated for the gas to pass through the catalyst bed 20_{c} disposed at the bottom rather than the catalyst bed 20ₐ disposed at the top. Here, the mixed gas may not be fed into the catalyst bed 20ₐ disposed at the top, and a temperature of the catalyst bed 20ₐ disposed at the top may thus be decreased over time. If the catalyst bed 20ₐ disposed at the top is used again after this temperature decrease, the ammonia synthesis efficiency may be lower because the temperature of the catalyst bed 20ₐ disposed at the top is decreased. Here, the catalyst bed 20ₐ disposed at the top, which has the lower temperature, may be preheated by the microwaves emitted by the microwave heating device 70ₐ, thus achieving significantly improved (or excellent) ammonia synthesis efficiency even when the catalyst bed is used again for the operation.

One or more, two or more, three or more, four or more, five or more, or eight or more microwave heating devices may be installed on each catalyst bed, and the number of microwave heating devices is not limited thereto. The number of the microwave heating devices may be increased based on a size of the reactor, and an installation location of the microwave heating device may be adjusted for efficient microwave emission.

The ammonia synthesis system may further include a microwave guide 71. The microwave guide may enable the microwaves emitted by the microwave heating device to reach the catalyst bed more efficiently. The shape or installation location of the microwave guide 71 may be changed based on a microwave waveform.

Referring to FIG. 7, in the ammonia synthesis system 1 according to an embodiment of the present disclosure, each microwave guide 71a, 71b, or 71c may be installed at each microwave heating device 70ₐ, 70_{b}, or 70_{c}, or only one or more microwave guides may respectively be installed at the microwave heating devices 70ₐ, 70_{b}, and 70_{c}.

In the ammonia synthesis system according to an embodiment of the present disclosure, ammonia may be synthesized at 1 to 500 bar or 10 to 300 bar.

In addition, in the ammonia synthesis system according to an embodiment of the present disclosure, ammonia may be synthesized at 100 to 800°C or 200 to 700°C.

The ammonia synthesis system according to an embodiment of the present disclosure may further include a heat exchanger disposed downstream of the catalyst bed to remove heat from an effluent of the catalyst bed. The heat exchanger may surround the catalyst bed or its surroundings.

The ammonia synthesis system according to the present disclosure may include additional heat removal means other than the supply of the cooling mixed gas by further including the heat exchanger. This configuration may enable a more flexible operation of the ammonia synthesis system.

As set forth above, the ammonia synthesis system according to an embodiment of the present disclosure may cope with the change in the flow rate that occurs during the production cycle.

The ammonia synthesis system according to still another embodiment of the present disclosure may maintain the uniform flow rate distribution at the front end of the catalyst bed included in the ammonia synthesis reactor even when the flow rate of the raw material, such as hydrogen, fed into the ammonia synthesis system is decreased.

The ammonia synthesis system according to an embodiment of the present disclosure may synthesize ammonia in an eco-friendly manner.

The embodiments described above are only an example to which a principle of the present disclosure is applied, and may further include other embodiments within the scope of the present disclosure. Furthermore, the embodiments may be combined to form additional embodiments.

## Claims

1. A mixed gas distribution plate (40; 40a, 40b, 40c) for an ammonia synthesis reactor (10), the plate (40; 40a, 40b, 40c) comprising a plurality of openings (41),
wherein some openings among the plurality of openings (41) are mounted with a cover (42) at the bottom, and
wherein the cover (42) is opened under a fluid pressure.

2. The plate of claim 1, wherein the openings (41) mounted with the cover (42) have a cover fixing bracket (43) disposed at the top, which is connected with the cover (42) by a spring (44).

3. The plate of claim 1, wherein in the openings (41) mounted with the cover (42), the cover (42) mounted on an opening (41) is automatically opened and closed in a sliding manner by an electric motor and a gear.

4. The plate of the preceding claims, wherein the mixed gas distribution plate (40; 40a, 40b, 40c) has an opening ratio of 5 to less than 100%, where the opening ratio is a percentage of the total area of the openings (41) on the plate (40; 40a, 40b, 40c) to the total area of the plate (40; 40a, 40b, 40c).

5. The plate of the preceding claims, wherein an area ratio of an opening (41) mounted with no cover to an opening (41) mounted with the cover (42) is 1:0.5 to 1:1.5.

6. The plate of the preceding claims, further comprising a plurality of mixed gas flow pipes (450) fixed to a lower surface of the plate (40; 40a, 40b, 40c).

7. The plate of claim 6, wherein the mixed gas flow pipe (450) has a bottom surface and a side surface connecting the bottom surface with the distribution plate (40; 40a, 40b, 40c),
wherein a plurality of upper apertures (451a) are formed in a side surface of an upper part (450a) of the mixed gas flow pipe (450) spaced apart from each other along a circumference of the pipe (450),
wherein a plurality of middle apertures (451b) are formed in a side surface of a middle part (450b) of the mixed gas flow pipe (450) spaced apart from each other along the circumference, and
wherein a plurality of lower apertures (451c) are formed in a side surface of a lower part (450c) of the mixed gas flow pipe (450) spaced apart from each other along the circumference,
optionally wherein the mixed gas flow pipe (450) includes a cover (452) surrounding at least some regions of the side surface of the mixed gas flow pipe (450) to provide a space for a fluid flowing out of the side surface of the mixed gas flow pipe (450) after passing through the upper aperture (451a) to be guided toward the middle aperture (451b).

8. The plate of claim 6 or 7, wherein the mixed gas flow pipe (450) further includes a separator plate (453) dividing the upper (450a) and middle parts (450b) of the mixed gas flow pipe (450) from each other.

9. The plate of the preceding claims, wherein the mixed gas distribution plate (40; 40a, 40b, 40c) has a cap disposed on a lower surface of the opening (41).

10. An ammonia synthesis system comprising:
an ammonia synthesis reactor (10);
a single or two or more catalyst beds (20; 20a, 20b, 20c) included in the ammonia synthesis reactor (10);
a distribution device (30; 30a, 30b, 30c) disposed upstream from each of the catalyst beds (20; 20a, 20b, 20c) and distributing mixed gas to the reactor (10);
a mixed gas supply line (50; 50a, 50b, 50c) disposed to supply the mixed gas to the distribution device (30; 30a, 30b, 30c); and
a mixed gas distribution plate (40; 40a, 40b, 40c) according to claim 1 that is disposed between the catalyst bed (20; 20a, 20b, 20c) and the distribution device (30; 30a, 30b, 30c) .

11. The system of claim 10, further comprising a microwave heating device (70; 70a, 70b, 70c) for emitting microwaves to each of the catalyst beds (20; 20a, 20b, 20c),
preferably further comprising a microwave guide (71; 71a, 71b, 71c) for guiding the microwave to reach the catalyst bed (20; 20a, 20b, 20c).

12. The system of claim 10 or 11, wherein the distribution device (30; 30a, 30b, 30c) has a disk shape or a toroidal shape.

13. The system of any one of claims 10 to 12, further comprising a backflow prevention plate (60; 60a, 60b) disposed downstream from each of the catalyst beds (20; 20a, 20b, 20c) except for the catalyst bed (20c) disposed at the lowest of the two or more catalyst beds to block a backflow of the mixed gas.

14. A method for synthesizing ammonia using the ammonia synthesis system of according to any one of claims 10 to 13.

15. The method of claim 14, wherein ammonia is synthesized in the ammonia synthesis system at 10 to 300 bar, and/or 100 to 800 °C.
